(19) Europäisches Patentamt
European Patent Office
Office européen des brevets

(11) Publication number: **0 414 375 A1**

# (12) EUROPEAN PATENT APPLICATION

(21) Application number: **90307922.6**

(22) Date of filing: **19.07.90**

(51) Int. Cl.[5]: **C08G 18/10**, C08G 18/32, C08G 18/69, C08G 18/12

(30) Priority: **01.08.89 GB 8917560**

(43) Date of publication of application: **27.02.91 Bulletin 91/09**

(84) Designated Contracting States: **AT BE CH DE DK ES FR GB GR IT LI LU NL SE**

(71) Applicant: **BP Chemicals Limited**
**Belgrave House 76 Buckingham Palace Road**
**London, SW1W 0SU(GB)**

(72) Inventor: **Cawley, Margaret Christine**
**BP Chemicals Limited, Hayes Road, Sully**
**Penarth, South Glamorgan, CF6 2YU(GB)**

(74) Representative: **Krishnan, Suryanarayana Kalyana et al**
**BP INTERNATIONAL LIMITED Patents & Agreements Division Chertsey Road**
**Sunbury-on-Thames Middlesex TW16 7LN(GB)**

## (54) Coating compositions.

(57) This invention relates to a moisture-curable coating composition capable of curing at ambient temperature and comprising (a) an isocyanate functionalised prepolymer derivable from reacting a di- or poly-isocyanate with a functionalised polybutadiene having a functionality of at least 2, (b) an isocyanate and (c) an oxazolidine, a ketimine or an aldimine as curing agents.

The coatings produced using the compositions of the present invention have improved impact resistance and surface tolerance.

**EP 0 414 375 A1**

# COATING COMPOSITIONS

The present invention relates to moisture-curable coating compositions suitable for use as surface coatings.

Moisture-curable resins are generally urethane polymers and consist of adducts of hydroxy containing resins with a large excess of polyisocyanate. They are prepared by refluxing a polyol with a polyisocyanate or, alternatively, the polyol and polyisocyanate may be simply mixed and allowed to react at room temperature over a period of days. The adduct so formed is then dissolved in water-free solvents to form a lacquer. Water must be absent at this stage otherwise premature curing will take place. On applying this lacquer to a surface the moisture present in the atmosphere reacts with the isocyanate groups present in the resin, and subsequent reactions lead to gelation and the formation of a cured paint film.

It is conventional to use a catalyst to accelerate the curing process.

One disadvantage of conventional moisture cured urethane coatings is the entrappment of $CO_2$ especially in films of thickness above 100 micrometers. It is an object of the present invention to mitigate this problem by choice of suitable curing agents whilst additionally improving the impact resistance and surface tolerance of the coating by suitable choice of prepolymers.

Accordingly, the present invention is a moisture-curable coating composition capable of curing at ambient temperature and comprising as components:

(a) at least one isocyanate functionalised prepolymer derivable by reacting a di- or poly- isocyanate with a functionalised polybutadiene resin which has a functionality of at least 2;

(b) an isocyanate; and

(c) an oxazolidine, ketimine or aldimine curing agent.

The isocyanate functionalised prepolymer (a) may be derived by reacting a functionalised polybutadiene with a di- or poly-isocyanate such as e.g. tolylene di-isocyanate (hereafter "TDI"), metaphenylene di-isocyanate (hereafter "MPDI"), diphenylmethane-4,4-di-isocyanate (hereafter "MDI"), hexamethylene di-isocyanate (hereafter "HMDI"), 4,4′-methylene bis(cyclohexylisocyanate) (hereafter "MBCI"), isophorone di-isocyanate (hereafter "IPDI"), Desmodur N (Regd. Trade Mark) which is a tri-isocyanate of the formula $[OCN(CH_2)_6NH\ CO]_2-N-(CH_2)_6-NCO$, and the di-isocyanate DDI (Regd. Trade Mark) which is described as $OCN(C_{36}$hydrocarbyl group) NCO with an NCO content of 14% and a room temperature viscosity of 150 cps (GeneralMills Inc., Product Bulletin CD58 (9/29/65)).

The isocyanate functionalised prepolymer (a) is derivable by reacting any one of the isocyanates listed in the context of (a) above with a functionalised polybutadiene resin having a functionality of at least 2.

The functionalised polybutadiene resin having a functionality of at least 2 is suitably a hydroxy terminated polybutadiene which is a homopolymer of butadiene and typically has a structure

$$HO-[(CH_2-CH=CH-CH_2)_{.2}-(CH_2-\underset{\displaystyle CH=CH_2}{\underset{|}{CH}})_{.2}(CH_2-CH=CH-CH_2)_{.6}-]_nOH$$

cis (first unit); trans (third unit)

These typically have a molecular weight in the range of 1500-5000, preferably from 2000-3500.

The hydroxy terminated polybutadiene resins have a functionality (defined as the number of free functional groups such as e.g. free -OH groups per molecule ranging from 2-3, preferably from 2.2 - 2.8.

The hydroxy terminated polybutadiene resin is most preferably one of Poly bd R-45M or Poly bd R45HT (both Registered Trade Marks) representing respectively a number average molecular weight of 2800 (functionality 2.2 - 2.4) and 2880 (functionality 2.4 - 2.6) as supplied by Atochem Limited.

The functionalised isocyanate prepolymer (a) can be prepared e.g. at room temperature by slowly adding the polybutadiene resin to the isocyanate which already contains a catalyst such as e.g. dibutyl tin dilaurate. The reaction mixture is stirred continuously throughout the addition and the temperature maintained at 20-25 °C. The reaction is continued until theoretical isocyanate content of the prepolymer is substantially reached.

During the preparation of the isocyanate functionalised prepolymer, excess monomeric isocyanates can be scavenged by adding compounds having reactive hydrogen atoms to the reaction mixture. Examples of such compounds include short chain diols and diamines, especially diols. These compounds can also aid hardening of the product. The choice of appropriate diols can also obviate the need for the optional isocyanate component (b) in the composition.

The functionalised prepolymer (a) used is suitably such that the total polybutadiene content thereof in the final composition inclusive of prepolymer (b), if any, and the curing agent (c) is from 3-50%w/w, preferably from 6-30%w/w.

By an "isocyanate" in the context of optional component (b) as used herein is meant di-isocyanates, oligomeric isocyanates, polyisocyanates, prepolymers of isocyanates derivable from the reaction of a di- or a polyisocyanate with a compound having reactive hydrogen atoms such as compounds having -OH or -NH-functions, and blends of one or more of these.

In the context of component (b) a prepolymer can for example be formed by reacting any one of the isocyanates listed in the context of component (a) above with a compound containing reactive hydrogen atoms especially -OH groups and these may include low molecular weight diols, triols, polyols etc. and higher molecular weight polyesters, polyethers and polycarbonates and blends thereof. Particularly preferred for use as component (b) are the prepolymers based on the higher molecular weight linear polyesters, polyethers and polycarbonates - commonly referred to as "moisture curing" prepolymers.

| Specific Examples of (b) include: | |
|---|---|
| Desmodur* E1361 | (ex Bayer UK Ltd) |
| Desmodur* TP LS2885 | (based on polyester polycarbonate ex Bayer UK Ltd) |
| Prepolymer IPDI-UT994 | (based on polyether, ex Hüls (UK) Ltd) |
| Prepolymer IPDI-UT1021 | (based on polyester, ex Hüls (UK) Ltd) |
| Trixene* EP9A/184 | (based on polyether, ex Baxenden) |

* Regd. Trade Mark.

Where (b) is a prepolymer it is essential that such prepolymer is isocyanate end-capped prior to contact with component (a).

Component (b) is preferably so chosen that the polymeric component of the cured coating composition is in two phases so as to improve impact resistance and surface tolerance by encapsulation of surface contaminants.

The amount of a component (b) in the coating composition of the present invention is suitably from 1-40%, preferably from 5-25%w/w based on the final composition.

The curing agent (c) is an oxazolidine, a ketimine or an aldimine. The ketimines and aldimines are Schiff's bases derived from a ketone or an aldehyde respectively. Where the curing agent is an oxazolidine, it may be a mono-, di, or polyoxazolidine including the oligomers and polymers of oxazolidines, and polymer substituted oxazolidines such as poly(meth)acrylic oxazolidines. Whichever oxazolidine is used it should be such that once incorporated into the coating compositions of the present invention they are capable of being hydrolysed in the presence of moisture to yield a mixture of hydroxyl and secondary amine groups which are, in fact, the curing agents.

Specific examples of oxazolidines that may be used in the compositions of the present invention include Hardener OZ (ex Bayer UK Ltd), 2,2-dihydro oxazolidine and 2-isopropyl oxazolidine.

The mole ratio of oxazolidine curing agent to isocyanate groups in the composition is suitably from 0.5:1 to 1:1 preferably from 0.5:1 to 0.7:1.

The compositions of the present invention may contain in addition the conventional grinding resins, pigments, drying agents, solvents, bubble release agents, adhesion promoters, light stabilisers, antiskin agents and catalysts well known to those skilled in the art.

The compositions of the present invention can be prepared by conventional means as one or two pack formulations. If a one pack, storage stable system is required, pigments and solvents must be dried e.g. to a moisture content of <0.5% and <0.02% respectively before use and pigment dispersion should be ideally carried out in sealed equipment such as a ball mill. Thus, a grinding resin (e.g. Laropal A81, Regd. Trade Mark) can be first dissolved in solvent and then other components such as thixotropes, bubble release agents, stabilizers, catalysts, etc. incorporated therein. Pigments and molecular sieves are thereafter dispersed therein using e.g. high speed impellers, ball mill etc. until required fineness of the grind is reached. In a one pack system a moisture scavenger may be added at this stage, if required, and the pigment dispersion is left for at least six hours before it is blended with the prepolymers (a) and (b) and curing agent (c) using conventional dispersion equipment. If required, the anti-skin agent may be added at this stage.

If a two pack system is being formulated, the prepolymers (a) and (b) and curing agent (c) are blended

and placed in one pack, the pigment dispersion, which need not be freed from moisture, is placed in a separate pack. The coating is applied at the point of use and the curing of any coating applied takes place either through the moisture in the atmosphere (for one-pack formulation) or through the moisture present in the dispersion and/or solvent and/or atmosphere (in the case ot the two-pack formulations).

The compositions of the present invention find particular use as surface coatings with improved impact resistance and surface tolerance. They can be used both as primers and top coats.

The present invention is further illustrated with reference to the following Examples:

| | REAGENTS USED SUPPLIER | GENERIC CLASS/PURPOSE |
|---|---|---|
| IPDI UT1021* | Hüls (UK) LTD | IPDI/Polyester based prepolymer (IPDI = Isophorone Diisocyanate) |
| IPDI UT994* | Hüls (UK) LTD | IPDI/Polyether based prepolymer |
| Hardener OZ* | Bayer UK Ltd | Uretheane Bis Oxazolidine |
| Stanclere TL* | Akzo Chemie | Di Butyl Tin Dilaurate |
| Additive OF* | Bayer UK Ltd | Antiskin Agent |
| Laropal A81* | BASF | Urea-Aldehyde Resin |
| Solvent A180* | BP Chemicals | Hydrocarbon Solvent |
| Acronal* 700L | BASF | Copolymer of Butyl Acrylate and Vinyl Isobutyl Ether used as bubble release agent. |
| Tioxide RCR2* | BTP Tioxide | Titanium Dioxide Pigment |
| White Barytes MB4A | ex Haeffner | Barium Filler |
| Microtalc IT Extra* | Norwegian Talc | Talc Filler |
| Sylosiv A3* | W R Grace | Micronised Molecular Sieve |
| Perchem 44* | Perchem Ltd | Thixotrope |
| Perchem X T* | Perchem Ltd | Thixotrope |
| Niax Al* | Union Carbide | Amine Catalyst |
| Cyanox 2246* | Ciba-Geigy | Hindered Phenolic Antioxidant |
| Irganox 1076* | Ciba-Geigy | Hindered Phenolic Antioxidant |
| Tinuvin 292* | Ciba-Geigy | Hindered Amine light stabiliser |
| Hypermer LP1* | ICI Speciality Chemicals | Polymeric dispersant |
| Dynasylan Glymo* | Dynamit Nobel | Epoxy Silane |
| Titania RCNX* | NL Chemicals | Titanium Dioxide Pigment |
| IPDI T1890L* | Hüls (UK) LTD | Trifunctional IPDI Prepolymer |
| Mistron CF6* | Cyprus Minerals | Talc Filler |
| Shieldex AC5* | WR Grace | Ion Exchange Pigment |
| Calcined Alumina | Cooksons | Alumina Filler |
| Regal 500R* | Cabot | Carbon Black |
| Barytes | Haeffner | Barytes Filler |

* Registered Trade Mark.

| Prepolymer Formulations | | | |
|---|---|---|---|
| | A | B | C |
| REACTION TEMP. | 60 °C pbw | 20-25 °C pbw | 60 °C pbw |
| Poly bd R45HT | 100 | 100 | 100 |
| IPDI | 53 | 50.5 | 31 |
| 2,ethyl-1,3-hexane diol | 10.56 | 11.09 | - |
| Benzoyl chloride | 0.6 | - | 0.06 |
| Niax Al | 0.04 | - | 0.02 |
| A180 (Solvent) | 15.7 | - | - |
| Irganox 1076 | 1.4 | 1.78 | - |
| Stanclere TL | - | 0.16 | - |
| Xylol | - | 43.75 | - |

Methods of preparation

A. Poly bd R45HT containing the Niax Al catalyst was slowly added to IPDI at ca 60 °C under nitrogen (ca 3 hours) followed after ca $\frac{1}{2}$ hour by slow addition of the 2-ethyl-1,3-hexane diol (ca $\frac{1}{2}$ hour). Theoretical NCO content was obtained 26 hours after the last addition (16 hours spent at 60 °C) whereupon the antioxidant, dissolved in A 180, was added and the prepolymer canned.

B. The xylol was split between the Poly bd R45HT, 2-ethyl-1,3-hexane diol and the Irganox 1076 in a ca 5.9:5:1 ratio. The catalyst was added to the IPDI. The Poly bd R45HT in xylol was slowly added to the IPDI with stirring (ca 4 hours), controlling the temperature between 20 and 25 °C. This was followed after ca $\frac{1}{2}$ hour by slow addition of 2-ethyl-1,3-hexane diol in xylol (ca 1 hour) -again keeping the temperature between 20 and 25 °C. Theoretical-NCO content was obtained within 24 hours after the last addition whereupon the antioxidant was added and the prepolymer canned.

C. All reaction components were added and the reaction mixture heated to 60 °C and held at this temperature until the theoretical isocyanate content was reached when the batch was cooled and discharged.

D. Panel preparation and coating method

1. Test Panels

(a) Polished steel panels were Q panels supplied by the Q panel Company,

(b) Grit blasted panels were prepared to Swedish visual standard SA$2\frac{1}{2}$.

(c) Rusty panels were prepared from Q panels which were subjected to natural outdoor weathering for approximately six months to Swedish standard rust grade C. After weathering the rusty panels were manually prepared with a scraper and wire brush to remove loose rust and provide a surface no better than Cst2.

(d) Oily panels were prepared as above and then coated with a thin film of crude oil at approximately 0.1mg/cm$^3$.

(e) Wet panels were prepared as above and then, immediately before painting, coated with a fine mist of water such that the surface was damp, but with no large droplets of water visible and that a finger wiped across the surface left a mark.

2. Coating Method

(a) Application in 1 coat via appropriate doctor blade to give the required wet film thickness.
(b) Application via airless spray to give the required wet film thickness.

E. TEST METHODS

1. Falling ball impact test

Coated plates-conditioned for a minimum of one hour either at 5°C or under laboratory ambient conditions - were subjected to a 180 inch lb impact test using a tubular Sheen impact tester ref.804. Extent of coating damage, cracking or delamination was noted.

2. Salt spray test ASTM B117

Coated panels were scored through to the base metal along two diagonals and subjected to the standard method above. Exposure was for 1000 hours. Note was made of blistering, lifting and rusting.

3. Humidity Test BS3900 part F2 April 1973

Coated panels were scribed down the centre with a single vertical line approx 2 inches long and subjected to the above test for 1000 hours. Note was made of blistering and other signs of deterioration.

4. Prohesion Test

The test cycle consists of a salt spray (0.4% solution of sodium chloride and ammonium sulphate (ratio 1:7)) which is maintained for 1 hour at ambient and then a 2 hour drying cycle at a cabinet air temperature of 35°C.

The lower part of the panel is scribed with a St. Andrew's cross. Panels are examined for loss of adhesion and corrosion undercut from the scribe, presence of blistering or rust spotting and other general defects e.g. discolouration.

5. Weatherometer Test - BS3900 Part 3 1971

Coated panels were subjected to the above test for 1000 hours. Note was made of blistering, whiteness and gloss retention, chalking and crazing.

6. Colour measurement

Whiteness and whiteness retention were measured using a MM Q2000 Colour Master using D65 illuminant (the current CIE standard for daylight) and the CIELAB equation.

7. Coating Torque Adhesion

Torque adhesion values were measured, at least one week after coating application, using an Epprecht twist-o-meter.

8. Coating "Pull-Off" Adhesion

Coating "pull-off" adhesion was measured at least one week after coating application using a HATE MKVII instrument from Hydraulic Adhesion Test Equipment Ltd.

Example 1

| | PARTS BY WEIGHT | |
|---|---|---|
| Pack 1 | Example (P) | Comparative Test (R) |
| Prepolymer A | 13.7 | - |
| IPDI UT 994 | 11.5 | 29.3 |
| Hardener OZ | 4.6 | 5.3 |
| Pack 2 | | |
| Dynasylan Glymo | 0.5 | 0.5 |
| Stanclere TL (10% in xylol) | 0.9 | 0.9 |
| Additive OF | 2 | 2 |
| Laropal A81 | 6.9 | 6.9 |
| A180 | 3.9 | 3.9 |
| Methoxy propyl acetate | 6.0 | 6.0 |
| Acronal 700L (10% in xylol) | 0.1 | 0.9 |
| Tioxide RCR 2 | 11.3 | 11.3 |
| White Barytes MB4A | 5.3 | 5.3 |
| Microtalc IT extra | 6.8 | 6.8 |
| Sylosiv A3 | 2.2 | 2.2 |
| Perchem 44 (15% gel in xylol) | 7.4 | 7.4 |

Coatings P and R with and without the polybutadiene prepolymer respectively were applied using a doctor blade to grit blasted and polished steel 'Q' panels at ca 150 micrometers dft. No evidence of any carbon dioxide generation was observed on examinatio of the cured coatings. Grit blasted panels were exposed for 10oo hours in prohesion, salt spray, humidity and weatherometer cabinets then assessed for blistering loss of adhesion and any other notiveable effects. Q panels were exposed for 1000 hours in the weatherometer.

Results showed that whilst coatings P and R gave good corrosion protection to grit blasted panels, coating P had superior impact performance to coating R. Both coatings passed the direct impact test at ambient temperature after weathering but on reverse impact testing, coating R split at the point of impact whereas coating P showed only a localised microcrazing.

Coating P was found, on dynamic mechanical thermal analysis with a polymer laboratories instrument after 7-12 days cure, to exhibit two glass transitions at -50°C and 100°C. This indicates two phase structure in the polymeric coating binder, whereas coating R was found to exhibit only the single main transition which indicates a single phase structure.

Example 2

| | PARTS BY WEIGHT | |
|---|---|---|
| Prepolymer B<br>IPDI UT994<br>Hardener OZ | 15.8<br>11.5<br>4.2 | PACK 1 |
| Laropal A81<br>n-Butylacetate<br>Perchem 44 (15% gel in xylol)<br>Perchem XT<br>Hypermer LPI<br>Acronal 700L (10% solution in xylol)<br>Titania RCNX<br>Microtall IT extra<br>White Barytes MB4A<br>Sylosiv A3<br>Dynasylan Glymo<br>Oleic acid (10% in xylol)<br>Tinuvin 292 (50% in xylol)<br>Stanclere (10% in xylol) | 6.84<br>4.50<br>3.70<br>0.18<br>0.50<br>0.24<br>11.3<br>6.8<br>5.3<br>2.26<br>0.2<br>0.8<br>0.6<br>0.4 | PACK 2 |

Example 2 is a coating based on prepolymer B. This coating was spray applied by airless spray equipment to grit blasted panels to give a dft of ca 150 micrometers. No evidence of carbon dioxide generation was observed on examination of the cured coatings. After curing 7 days, panels were subjected to 1000 hours exposure in the weatherometer. After weathering, the coating exhibited good gloss and whiteness retention. The weathered panels were subjected to a 180 in. lbs impact test at 5 °C and suffered only minor cracking at the point of impact.

Example 3

| | PARTS BY WEIGHT |
|---|---|
| Pack 1 | |
| Prepolymer B | 7.28 |
| IPDI UT994 | 14.56 |
| T1890L | 7.28 |
| Xylene | 2.45 |
| Hardener OZ | 6.45 |
| Pack 2 | |
| Perchem 44 (15% gel in xylol) | 7.03 |
| Perchem XT | 0.38 |
| Laropal A81 | 6.00 |
| Mistron CF6 | 10.74 |
| Shieldex AC5 | 4.64 |
| Calcined Alumina | 17.86 |
| Tioxide RCR2 | 4.89 |
| Regal 500R | 0.12 |
| Stanclere TL | 0.47 |
| Dynasylan Glymo | 0.59 |
| Acronal 700L (10% in Xylol) | 0.28 |
| Tinuvin 292 (50% in Xylol) | 0.71 |
| Hypermer LP1 | 0.59 |
| n-butyl acetate | 4.81 |
| Xylene | 2.87 |

A coating prepared according to the above formulation was coated by doctor blade onto grit blasted and grit blasted oily panels at 500 micrometers wet film thickness. HATE "Pull off" adhesion values were measured at 930 lb/in$^2$ for the grit blasted panel and 730 lb/in$^2$ for the oil contaminated panel. Although adhesion was reduced in the presence of oil, the measured value was still acceptably high.

Example 4

| | PARTS BY WEIGHT |
|---|---|
| Prepolymer D | 11.09 |
| IPDI UT1021 | 10.60 |
| Hardener OZ | 4.1 |
| Additive OF | 2.0 |
| Xylene | 5.6 |
| Methoxypropyl acetate | 14.3 |
| Stanclere TL | 1.0 |
| BPA180 | 8.7 |
| Laropal A81 | 5.6 |
| Acronal 700L (10% in Xylol) | 0.2 |
| Tioxide RCR2 | 7.6 |
| Micronised Barytes | 11.6 |
| Microtalc IT Extra | 12.6 |
| Perchem 44 (15% gel in Xylol) | 2.8 |
| Sylosiv A3 | 3.0 |

Prepolymer D was prepared as for prepolymer example C but with 33.42 parts of IPDI. A coating was then prepared as one pack for performance evaluation according to the above formulation and coated onto grit blasted and grit blasted wet panels. Coating torque adhesion was measured at 14 N/mm² on the grit blasted panel and 13 N/mm² on the wet panel. Adhesion to the wet panel was acceptably high.

Example 5

| | PARTS BY WEIGHT |
|---|---|
| Prepolymer C | 12.5 |
| BPA180 | 5.5 |
| IPDI UT1021 | 11.5 |
| Hardener OZ | 5.5 |
| Additive OF | 2.0 |
| Stanclere TL (10% in Xylol) | 0.9 |
| Dynasylan Glymo | 0.5 |
| Xylene | 5.74 |
| BPA180 | 6.53 |
| Laropal A81 | 6.84 |
| Acronal 700 (10% in Xylol) | 0.12 |
| Microtalc IT Extra | 7.81 |
| Tioxide TR92 | 14.20 |
| Perchem 44 (15% gel in Xylol) | 7.38 |
| Sylosic A3 | 2.26 |

A one pack coating prepared for performance evaluation according to the above formulation was applied by doctor blade at an average dry film thickness of approximately 120 micrometers to panels which were subjected to accelerated environmental exposure for 1000 hours. The performance achieved in terms of degree of blistering at the scribe and across the whole panel was similar on Q panels, rusty panels, rusty oily panels and rusty wet panels thus indicating that the coating was tolerant of poor surface conditions.

**Claims**

1. A moisture-curable coating composition capable of curing at ambient temperature and comprising as components:
   a) at least one isocyanate functionalised prepolymer derivable by reacting a di- or poly-isocyanate with a functionalised polybutadiene resin which has a functionality of at least 2;
   b) an isocyanate; and
   c) an oxazolidine, ketimine or aldimine curing agent.
2. A composition according to Claim 1 wherein the di- or poly-isocyanate from which component (a) is derived is selected from tolylene di-isocyanate, meta-phenylene di-isocyanate, diphenylmethane-4,4′-di-isocyanate, hexamethylene di-isocyanate, 4,4′-methylenebis(cyclohexylisocyanate), isophorone diisocyanate, a triisocyanate of the formula $[OCN(CH_2)_6NHCO]_2\text{-}N\text{-}(CH_2)_6\text{-}NCO$, and a di-isocyanate of the formula $OCN(C_{36}$hydrocarbyl group)NCO with an NCO content of 14% and a room temperature viscosity of 150 cps.
3. A composition according to Claim 1 or 2 wherein the functionalised polybutadiene resin from which component (a) is derived has a molecular weight in the range from 1500-5000.
4. A composition according to any one of the preceding Claims wherein the functionalised polybutadiene from which component (a) is derived has a functionality defined as the number of free functional groups per molecule of the polybutadiene ranging from 2-3.
5. A composition according to any one of the preceding Claims wherein the polybutadiene resin with a functionality of at least 2 from which component (a) is derived is a hydroxy-terminated polybutadiene of the structure:

$$HO-[(CH_2-CH=CH-CH_2)._2-(CH_2-\underset{\displaystyle CH=CH_2}{\underset{|}{CH}})._2(CH_2-CH=CH-CH_2)._6-]_nOH$$

cis CH=CH2 trans

6. A composition according to any one of the preceding Claims wherein the isocyanate functionalised prepolymer is present in the composition in an amount from 3-50%w/w based on the total of components (a), (b) and (c).

7. A composition according to any one of the preceding Claims wherein the component (b) is selected from di-isocyanates, oligomeric isocyanates, polyisocyanates, prepolymers of isocyanates derivable from the reaction of a di- or poly-isocyanate with a compound having reactive hydrogen atoms and blends of one or more of these.

8. A composition according to any one of the preceding Claims wherein the component (b) is a prepolymer of an isocyanate derivable by reacting a di- or poly-isocyanate with a compound containing reactive hydrogen atoms selected from:

i) low molecular weight diols, triols and polyols; and

ii) higher molecular weight polyesters, polyethers and polycarbonates; and

iii) blends of (i) and (ii) such that the prepolymer (b) is isocyanate end-capped prior to contact with component (a).

9. A composition according to any one of the preceding Claims wherein component (b) is so chosen that the polymeric component of the cured coating composition is in two-phases.

10. A composition according to any one of the preceding Claims wherein component (b) is present in an amount from 1-40%w/w of the final composition.

11. A composition according to any one of the preceding Claims wherein the component (c) is an oxazolidine such that when incorporated into the coating composition said component is capable of being hydrolysed in the presence of moisture to yield a mixture of hydroxyl and secondary amine groups.

12. A composition according to any one of the preceding Claims wherein the component (c) is an oxazolidine and the mole ratio of oxazolidine to isocyanate groups in the composition is in the range from 0.5:1 to 1:1.

European Patent Office

# EUROPEAN SEARCH REPORT

Application Number

EP 90 30 7922

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 254 177 (BASF)<br>* Claims 1,10; page 4, lines 43-46; page 5, lines 1-6; page 7, lines 51-58; page 8, lines 12-26 *<br>--- | 1-7,10-11 | C 08 G 18/10<br>C 08 G 18/32<br>C 08 G 18/69<br>C 08 G 18/12 |
| X | EP-A-0 156 165 (TREMCO INC.)<br>* Claims 1,6; page 4, lines 12-20; page 5, lines 11-21; page 8, lines 14-28 *<br>--- | 1-7,10-11 | |
| X | EP-A-0 291 850 (ELASTOGRAN GmbH)<br>* Claims 1,7-10; column 4, lines 12-16; column 5, lines 22-34; column 8, lines 2-40 *<br>--- | 1-7,10-12 | |
| X | FR-A-1 560 492 (GOODYEAR)<br>* Abstract points I1,I2A; page 3, left-hand column, paragraphs 2,6; page 3, right-hand columnm, paragraph 2 *<br>--- | 1-7,10-11 | |
| A | FR-A-2 077 401 (ROHM & HAAS)<br>* Claims 1,2,10-17; page 17, lines 26-34; page 24, line 9 - page 25, line 30; page 26, lines 13-23 *<br>--- | 1,12 | TECHNICAL FIELDS SEARCHED (Int. Cl.5)<br>C 08 G |
| A | EP-A-0 093 491 (THIOKOL CORP.)<br>* Claims 1,3,6; page 6, lines 12-18; page 8, lines 14-29 *<br>----- | 1 | |

The present search report has been drawn up for all claims

| Place of search | Date of completion of the search | Examiner |
|---|---|---|
| THE HAGUE | 29-11-1990 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document